Europäisches Patentamt

European Patent Office

Office européen des brevets

(11) Veröffentlichungsnummer: **0 157 378**
**A2**

(12) **EUROPÄISCHE PATENTANMELDUNG**

(21) Anmeldenummer: **85103780.4**

(22) Anmeldetag: **29.03.85**

(51) Int. Cl.⁴: **F 16 K 31/42**

(30) Priorität: **04.04.84 DE 3412545**

(43) Veröffentlichungstag der Anmeldung: **09.10.85**
**Patentblatt 85/41**

(84) Benannte Vertragsstaaten: **AT BE CH DE FR GB IT LI NL SE**

(71) Anmelder: **GARDENA Kress + Kastner GmbH, Lichternseestrasse 40 Postfach 27 47, D-7900 Ulm (Donau) (DE)**

(72) Erfinder: **Die Erfinder haben auf ihre Nennung verzichtet**

(74) Vertreter: **Patentanwälte Ruff und Beier, Neckarstrasse 50, D-7000 Stuttgart 1 (DE)**

(54) **Automatisch steuerbare Ventileinrichtung.**

(57) Eine automatisch steuerbare Ventilreinrichtung für ein wasserverbrauchendes Gerät, beispielsweise einen Rasensprenger, weist ein durch ein Hilfsventil (19) steuerbares Hauptventil (12) auf, wobei mindestens eines der Elemente in Schliessrichtung beaufschlagt ist. Der Antrieb ist derart ausgebildet, dass er nur während des Öffnens und während des Schliessens Strom verbraucht. Um ein sicheres Schliessen des Ventils zu gewährleisten, ist vorgesehen, dass zum Öffnen des Ventil mehr Energie benötigt wird als zu dessen Schliessen.

Zur Steuerung des Hilfsventils (19) kann vorzugsweise ein Elektromagnet verwendet werden, der zum Öffnen des Ventils einen Strompuls erhält, der den Anker des Elektromagneten an diesen anzieht, wobei er am Anker aufgrund des Restmagnetismus hängen bleibt. Zum Schliessen des Ventils wird ein Strompuls umgekehrter Polarität aber wesentlich kürzerer Dauer verwendet, der derart ausgewählt ist, dass durch ihn nur der Restmagnetismus des Elektromagneten beseitigt wird.

ACTORUM AG

0157378

Anmelderin:          GARDENA Kress + Kastner GmbH
                     Lichternseestraße 40
                     7900 Ulm/Donau


Automatisch steuerbare Ventileinrichtung


Die Erfindung betrifft eine automatisch steuerbare Ventileinrichtung für die Wasserzufuhr zu einem wasserverbrauchenden
Gerät, mit einem batteriebetriebenen Antrieb für das Ventil,
der nur während des Schließens und Öffnens des Ventils Strom
verbraucht.

Der Erfindung liegt die Aufgabe zugrunde, eine batteriebetriebene Ventileinrichtung zu schaffen, die einen möglichst
geringen Stromverbrauch und damit eine möglichst lange Batterielebensdauer gewährleistet und die darüber hinaus sicherstellt,
daß bei schwächer werdender Batterie das Ventil nicht in
geöffnetem Zustand verbleibt.

Zur Lösung dieser Aufgabe ist erfindungsgemäß vorgesehen,
daß das Ventil durch ein Hilfsventil hilfsdruckgesteuert und
in Schließrichtung vorgespannt ist und der Antrieb derart
ausgebildet ist, daß er zum Öffnen des Ventils mehr Energie
benötigt als zu dessen Schließen. Dies

0157378

macht es möglich, daß bei schwächer werdender Batterie die
Energie nicht mehr ausreicht, das Ventil zu öffnen, so daß
dadurch eine Art Batterietest automatisch durchgeführt wird.
Da die Öffnungszeiten dieser Ventileinrichtungen, z.B. bei
Rasenbewässerungsanlagen, in der Größenordnung von beispielsweise
einer halben bis einer ganzen Stunde liegen und die Batterieleistung während einer derart kurzen Zeitspanne kaum abnimmt,
ist sichergestellt, daß dann, wenn die Energie zum Öffnen
des Ventils ausreicht, sie anschließend auch wieder zum Schließen
des Ventils ausreicht.

Die Erfindung schlägt weiterhin vor, daß das Hilfsventil in
Schließrichtung vorgespannt ist und der Ventilantrieb auf
das Hilfsventil einwirkt. Zum Öffnen und Schließen des Hilfsventils ist in der Regel eine wesentlich geringere Energie
erforderlich, so daß hierdurch nochmals eine Einsparung von
Batterieleistung und damit eine Verlängerung der Lebensdauer
erreicht wird.

Die Erfindung schlägt vor, daß der Ventilantrieb über eine
von einer Zeitschaltung ansteuerbare Steuerelektronik betätigbar
ist. Bei der Zeitschaltung selbst handelt es sich um ein handelsübliches Bauteil, das in der Form eines integrierten Schaltkreises erhältlich ist. Dabei kann die Zeitschaltung so vorgenommen werden, daß bei Auslösung das Ventil geöffnet wird
und nach Ablauf einer voreingestellten Zeit sich wieder schließt.
Die Auslösung des Öffnungsvorganges kann entweder manuell
oder von einer Zeitschaltuhr vorgenommen werden, wobei ggf.
Feuchtigkeitsfühler und/oder Dämmerungsschalter zusätzlich
einsetzbar sind.

Die Erfindung schlägt als weitere Möglichkeit vor, daß der
Ventilteller des Hilfsventils als Anker eines Elektromagneten ausgebildet bzw. mit diesem verbunden ist und der Elektromagnet
den Antrieb bildet. Dies ist eine besonders einfache und elegante
Möglichkeit, da in diesem Fall kein Elektromotor verwenden
werden muß bzw. sich die Zahl der bewegten Teile verringern
läßt. Bei dieser Anordnung schlägt die Erfindung vor, daß
zum Öffnen des Hilfsventils an die Spule des Elektromagneten
ein kurzer Stromimpuls angelegt wird. Dieser kurze Stromimpuls
reicht aus, den Anker anzuziehen und damit das Hilfsventil
zu öffnen. Nach Abschalten des Stromimpulses bleibt der Anker
an dem Elektromagnet haften, da der Elektromagnet einen geringen
Restmagnetismus aufweist. Dieser Restmagnetismus reicht aus,
den einmal angezogenen Anker festzuhalten, da bei angezogenem
Anker der magnetische Kreis fast vollständig geschlossen ist.

Zum Schließen des Ventils ist erfindungsgemäß ein Impuls umgekehrter Polarität vorgesehen, der an die Spule des Elektromagneten gelegt wird, wobei die Länge und/oder die Stärke
des Impulses derart ausgewählt ist, daß der Restmagnetismus
des Spulenkerns beseitigt wird. Zur Beseitigung des Restmagnetismus ist ein Impuls umgekehrter Polarität mit wesentlich
geringerer Energie erforderlich, da die Remanenz des Elektromagneten wesentlich niedriger ist als die sich bei stromdurchflossener Spule einstellende magnetische Feldstärke. Besonders
günstig ist es daher, wenn der Impuls umgekehrter Polarität
in seiner Dauer wesentlich kürzer gehalten wird als der Öffnungsimpuls, da in diesem Fall keine Maßnahme zur Veränderung der
Stromstärke vorgenommen werden muß.

Die Maßnahmen nach der Erfindung machen es möglich, daß zum
Anziehen des Ankers tatsächlich nur ein kurzer Impuls ausreicht
und das Ventil anschließend geöffnet bleibt.

Die Auslösung der Steuerelektronik kann entweder manuell oder
durch eine Zeitschaltuhr vorgenommen werden, so daß beispielsweise täglich zu einer bestimmten Zeit das Gerät für eine
voreingestellte Zeitdauer betrieben wird. Es ist beispielsweise
bei Beregnungsanlagen auch möglich, die Einschaltung durch
einen Dämmerungsschalter auszulösen. Zusätzlich ist es möglich,
durch einen feuchtigkeitsabhängigen Schalter den Ausgang des
Zeitgebers abzuschalten, damit nicht bei Regen oder feuchtem
Rasen zusätzlich noch Wasser versprüht wird.

Weitere Merkmale, Einzelheiten und Vorzüge der Erfindung ergeben
sich aus der folgenden Beschreibung bevorzugter Ausführungsformen
sowie anhand der Zeichnung. Hierbei zeigen:

Fig. 1 einen Schnitt durch ein von einem Elektromagneten
betätigbares Ventil;

Fig. 2 in vergrößerter Darstellung den Anker des Elektromagneten in Fig. 1;

Fig. 3 eine Seitenansicht eines Gehäuses mit einer
darin untergebrachten Ventileinrichtung nach
der Erfindung;

Fig. 4 einen Schnitt durch eine weitere Ausführungsform;

Fig. 5 einen Schnitt längs Linie V-V in Fig. 4.

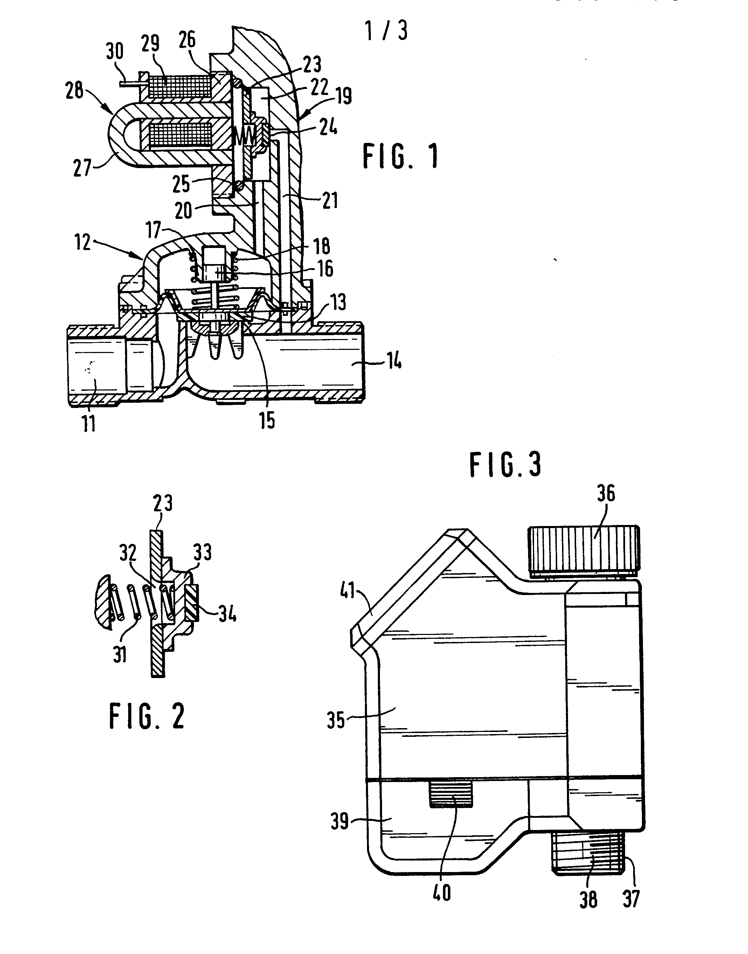

Die in Fig. 1 dargestellte Ventileinrichtung enthält einen
Wassereinlaß 11, ein Hauptventil 12 mit einem Ventilteller
13 sowie einen Wasserauslauf 14. Das Hauptventil 12 ist in
geschlossener Stellung dargestellt, wobei der Ventilteller
13 auf dem Ventilsitz 15 aufliegt ist. Der Ventilteller enthält
an seiner Oberseite einen Ansatz 16, der in einer Hülse 17
geführt ist und die Führung für den Ventilteller 13 bildet.

- 5 -

Außerhalb der Hülse 17 ist eine Schraubenfeder 18 angeordnet,
die den Ventilteller 13 in Richtung auf den Ventilsitz 15
beaufschlagt. Die Wirkung des Hauptventiles 12 wird durch
das in geschlossener Stellung angedeutete Hilfsventil 19 gesteuert. Die dargestellte Stellung der Ventileinrichtung entspricht also dem Zustand, in dem das Hilfsventil 19 und das
Hauptventil 12 geschlossen sind. Das Hauptventil ist über
zwei Steuerleitungen 20, 21 mit dem Hilfsventil 19 verbunden.
Die in Strömungsrichtung oberhalb des Ventiltellers 13 angeordnete
Steuerleitung 20 führt in eine Ventilkammer 22, in der ein
Ventilteller 23 des Hilfsventils 19 angeordnet ist. Der Ventilteller 23 ist zum Abschließen der Öffnung 24 der zweiten Steuerleitung 21 ausgebildet, die stromab des Hauptventils 12 ausmündet.

Links von dem Ventilteller 23 des Hilfsventils 19 ist eine
durch eine Dichtung 25 abgedichtete Scheibe 26 eingeschraubt,
die von den beiden Polen des Kerns 27 eines Elektromagneten
28 durchdrungen wird. Um den oberen Schenkel des Kernes 27
ist eine Spule 29 angeordnet, an deren Leitungsenden 30 Spannung
angelenkt werden kann. Zwischen die Scheibe 26 und den Ventilteller 23 des Hilfsventils 19 ist eine Schraubenfeder 31 eingesetzt, die das Hilfsventil in Richtung auf die Schließstellung
beaufschlagt. Die Schraubenfeder 31 greift in einer Öffnung
des Ventiltellers 23 ein.

Zum Öffnen des Hilfsventils 19 in Fig. 1 wird an die Spule
29 des Elektromagneten 28 ein kurzer Stromimpuls angelegt,
der Kern 27 des Elektromagneten wird dadurch magnetisch und
zieht den aus ferromagnetischem Material bestehenden Ventilteller
23 an, so daß die Öffnung 24 der Steuerleitung 21 freigegeben
wird. Beim Anliegen des Ventiltellers 23 am Kern 27 des Elektromagneten bleibt dieser auch nach Unterbrechen des Stromflusses
durch die Spule 29 hängen, da eine geringe Remanenz übrigbleibt, die in dieser Stellung zum Festhalten des Ventiltellers 23 vollständig ausreicht.

Um die Öffnung 24 des Hilfsventils 19 wieder zu schließen, wird ein Stromimpuls wesentlich kürzerer Dauer an die Spule 29 angelegt, wobei die Dauer derart gering gewählt ist, daß durch diesen Stromstoß nur die Remanenz beseitigt wird, der Elektromagnet selbst jedoch unmagnetisch bleibt. Dadurch wird es möglich, daß die Schraubenfeder 31 den Ventilteller 23 wieder auf die Öffnung 24 drückt.

Fig. 2 zeigt in vergrößerter Darstellung die Anordnung der Schraubenfeder 31 in einer Öffnung 32 des Ventiltellers 23. Unterhalb des Ventiltellers ist eine hutartige Halterung 33 angeordnet, deren Innenausnehmung mit der Öffnung 32 im Ventilteller 23 fluchtet. Die Halterung 33 haltert an ihrer Unterseite, d.h. an der in Fig. 1 rechten Seite, eine Dichtplatte 34, die zum Abschließen der Öffnung 24 dient.

Fig. 3 zeigt das Gehäuse 35 einer erfindungsgemäß ausgestalteten Ventileinrichtung. An der Oberseite ist eine mit einer Riefelung versehene Überwurfmutter 36 vorgesehen, mit der die Ventileinrichtung an einen Wasserhahn angeschraubt werden kann. An der Unterseite ist dementsprechend ein mit einem Außengewinde 37 versehener Stutzen 38 angeordnet, an dem ein Wasserschlauch angeschraubt werden kann. Die zum Betrieb der Ventileinrichtung nötigen Batterien sind in einem abnehmbaren Batteriefach 39 untergebracht, das zur Erleichterung des Abnehmens eine Griffmulde 40 aufweist.

Nach links oben ist ein Bedienfeld 41 angeordnet, an dem die Funktionen des Gerätes eingestellt und beispielsweise die

0157378

noch abzulaufende Zeit abgelesen werden kann. Das Gehäuse
ist wasserdicht ausgeführt.

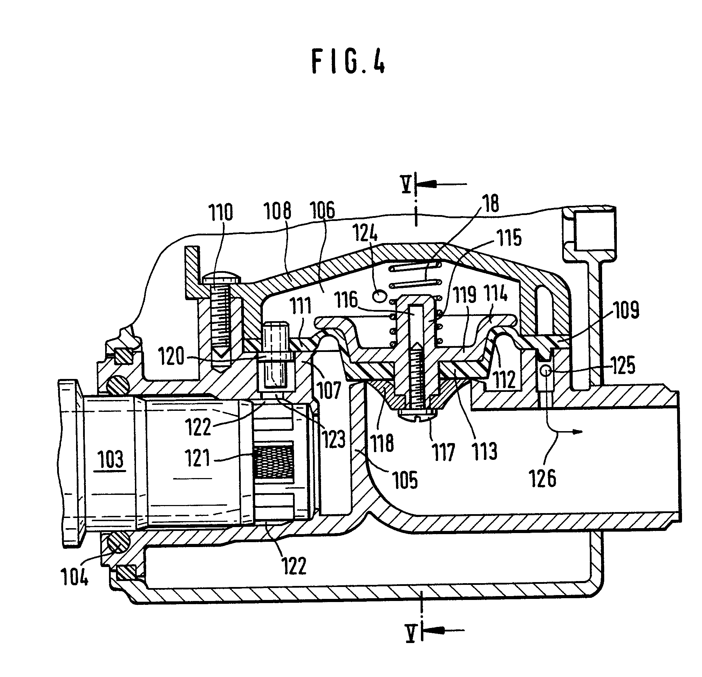

Fig. 4 zeigt eine der Fig. 1 ähnliche abgeänderte Ausführungsform. Das Ventil 101, dessen zugehöriges Hilfsventil aus Fig.
4 nicht ersichtlich ist, ist in einem abgebrochen dargestellten
Ventilgehäuse 102 angeordnet. Von der linken Seite her erfolgt
der Wassereintritt, rechts ist der Wasserauslauf 14 angeordnet.
Der Ventilsitz 15 ist ähnlich ausgebildet wie bei der Ausführungsform nach Fig. 1.

Das Wasser tritt durch den etwa zylindrischen Wassereinlauf
103 von links in das Gehäuse ein. Der Wassereinlauf 103 ist
mit Hilfe einer Dichtung 104 abgedichtet. Stromab des Wassereinlaufes 103 ist eine Querwand 105 angeordnet, deren in Fig.
4 obere Begrenzungskante den Ventilsitz 15 bildet. Fig. 4
zeigt das Ventil 101 in geschlossener Stellung.

Seitlich von Wassereinlauf 103 und -auslauf 14 ist eine Kammer
106 ausgebildet. Die Kammer 106 wird von einem umlaufenden
Rand 107 im Gehäuse 102 und einem Deckel 108 gebildet. Zwischen
den Deckel 108 und den umlaufenden Rand 107 des Gehäuses 102
ist eine Membran 109 eingesetzt, die durch das Festschrauben
des Deckels 108 mit Hilfe der Schraube 110 festgelegt ist.
Die Membran 109 wird von einem ringförmigen Rand 111, einer
etwa kreisförmigen, in der Mitte mit einem Loch versehenen
Platte 113 und einem diese beiden Teile verbindenden verformbaren
Zwischenteil 112 gebildet. Die Platte 113 bildet gleichzeitig
den Ventilteller und liegt in der in Fig. 4 dargestellten
Stellung auf dem Ventilsitz 15 auf. Auf der der Kammer 106
zugewandten Seite der Membran 109 ist diese durch einen Teller
114 verstärkt, der auf beiden Seiten einen etwa zylindrischen
Ansatz 115 aufweist. Der in Fig. 4 untere Teil des Ansatzes

0157378

115 greift durch das erwähnte Loch in der Scheibe 113 hindurch.
Der Ansatz 115 besitzt eine einseitig offene Längsbohrung
116. Von der stromab gerichteten Seite ist in den Ansatz 115
eine Schraube 117 eingeschraubt, die mit einer Klammer 118
den scheibenförmigen Teil 113 der Membran fest gegen den Bodenteil 119 des Tellers 114 andrückt.

Um den in das Innere der Kammer 106 gerichteten Teil des Ansatzes
115 ist, wie bei der Ausführungsform nach Fig. 1, eine Schraubenfeder 18 angeordnet, die das Ventil in Schließrichtung beaufschlagt.

Während bei der Ausführungsform nach Fig. 1 die Membran Löcher
aufwies, durch die Flüssigkeit zum Hilfsventil gelangen kann,
ist bei der Ausführungsform nach Fig. 4 im Randbereich der
Membran 109 eine Steuerdüse 120 angeordnet. Diese Steuerdüse
120 hat einen genau definierten und eingehaltenen Innendurchmesser, so daß die zum Steuern benötigte Wassermenge genau
dosiert werden kann. Damit erreicht man eine gleichmäßige
Öffnungs- und Schließgeschwindigkeit des Ventils, was zur
Verhinderung von Druckschlägen im Leitungssystem dient.

Das vordere, d.h. in das Innere des Gehäuses 102 gerichtete
Ende des Wassereinlaufes 103 enthält ein Sieb 121, das etwa
in der Zylinderfläche des zylindrischen Wassereinlaufes 103
liegt. Um das vordere Ende des Wassereinlaufs 103 herum ist
eine flache Nut 122 angeordnet, die einen Kanal für das durch
das Sieb 121 austretende Wasser bildet. Durch eine Öffnung
123 gelangt das durch das Sieb 121 geströmte Wasser in die
Steuerdüse 120 und von dort aus in die Kammer 106. Aus der
Kammer 106 gelangt das Wasser durch die angedeutete Öffnung
124 in die Zuleitung zum Hilfsventil, von dem es durch die

0157378

Öffnung 125 zurückkehrt. Von der Öffnung 125 gelangt es in
Richtung des Pfeiles 126 zur Abflußseite des Ventils 101.

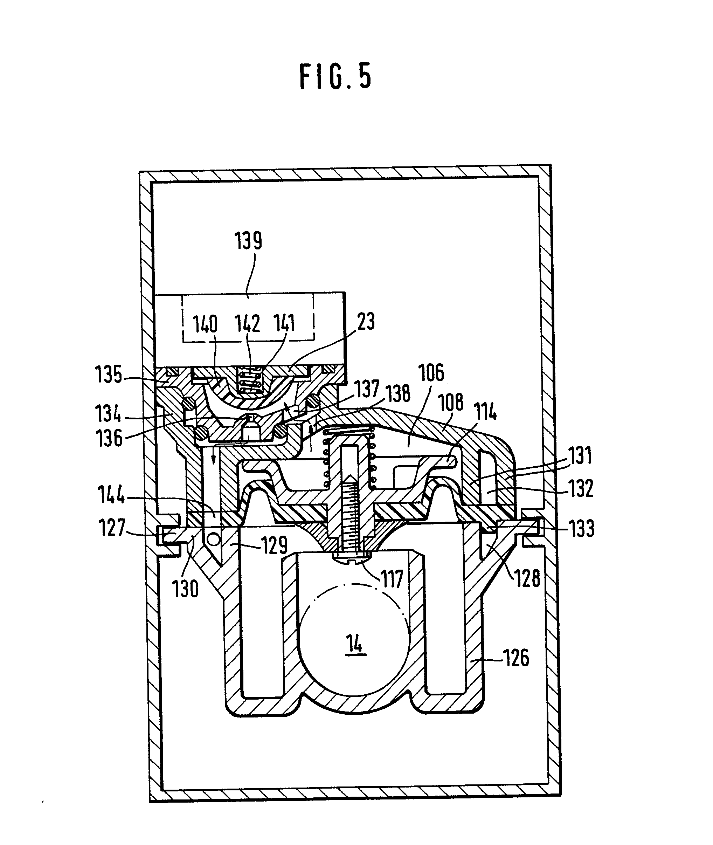

Bei geöffnetem Ventil 101 strömt das Wasser tangential an
der Innenseite des Siebes 121 vorbei, so daß etwa vorhandene
Verunreinigungen von der Hauptströmung weggerissen und das
Sieb 121 dadurch sauber gehalten wird. Durch die Verwendung
eines Siebes und der Steuerdüse wird die zum Steuern benötigte
Wassermenge genau dosiert und somit eine gleichmäßige Öffnungs-
und Schließgeschwindigkeit des Ventils erreicht. Dadurch lassen
sich Druckschläge im Leitungssystem verhindern. Durch diese
Anordnung ist es möglich, zum Betrieb des Hilfsventils mit
einer sehr kleinen Wasserströmung auszukommen. Dies führt
wiederum zu einem energiearmen Schalten. Der Hub der Magnetplatte, siehe Fig. 1 und Fig. 5, läßt sich beispielsweise
mit Vorteil auf 0,5 mm begrenzen. Dadurch benötigt der elektromagnetische Ventilantrieb zum Öffnen einen Schaltimpuls von
etwa 100 mA für ca. 150 ms, während zum Schließen 70 ms bei
50 mA ausreichen.

Fig. 5 zeigt nun einen um 90° versetzten Schnitt durch die
Anordnung nach Fig. 4, wobei diesmal das Ventil geöffnet ist
und das Hilfsventil ebenfalls sichtbar ist.

Das den Wasserauslauf 14 enthaltende untere Gehäuseteil 126
ist mit einem Flansch 127 in einer Führung im Gehäuse befestigt.
Im Bereich des Flansches 127 weist das Gehäuseteil 126 einen
etwa um den Ansatz 115 des Tellers 114 umlaufenden Schlitz
128 auf, so daß die obere Begrenzungsfläche des Gehäuseteils
126 von zwei konzentrischen Rippen 130, 129 gebildet wird.
Der Deckel 108 ist dementsprechend komplementär ausgebildet,
d.h. er wird ebenfalls von zwei konzentrischen umlaufenden
Rippen 131 gebildet, zwischen denen ein Schlitz 132 liegt.

0157378

Zwischen diesen Rippen ist der äußere Rand 111 der Membran
109 festgeklemmt, wobei die Membran 109 zusätzlich eine Rippe
133 aufweist, die in den Schlitz 128 eingreift.

Der Deckel 108 weist an seiner in Fig. 11 linken Seite eine
Halterung 134 für das Hilfsventil auf. In der Halterung 134
ist abgedichtet eine erste Schale 135 eingesetzt, die an ihrem
Boden eine nach innen gerichtete Erhöhung aufweist, in der
eine zentrale Öffnung 136 angeordnet ist. Im Randbereich ist
eine zweite Öffnung 137 vorhanden, wobei der Deckel 108 in
diesem Bereich ebenfalls eine Durchbrechung 138 aufweist.

Oberhalb der Schale 135 ist der Anker 23 des nur schematisch
dargestellten Ventilantriebs 139 angeordnet, wobei der Anker
23 auf seiner der Schale 135 zugewandten Seite einen Überzug
140 aus einem elastischen Material aufweist. In der Vertiefung
141 des Ankers 23 ist eine Feder 142 eingesetzt.

Das durch die Steuerdüse 120, siehe Fig. 4, in die Kammer
106 eingedrungene Wasser gelangt durch die Durchbrechung 138
im Deckel 108 und durch die Öffnung 137 in den Zwischenraum
zwischen der Schale 135 und dem Überzug 140 des Ankers 23.
Von dort aus gelangt es durch die zentrale Öffnung 136 in
den Zwischenraum 143 zwischen den Rippen 131 des Deckels 108
und von dort durch eine Öffnung 144 in der Membran 109 auf
nicht näher dargestellte Weise zum Auslaß.

Die Richtung des Strömens der Flüssigkeit bei geöffnetem Hilfsventil ist durch Pfeile dargestellt.

Erhält der Ventilantrieb 139 seinen Schließimpuls, so verschließt
der Überzug 140 des Ankers 23 die Zentralöffnung 136, was
dazu führt, daß in der Kammer 106 des Ventils der gleiche
Druck herrscht wie im Wassereinlauf 104. Dies führt zum Schließen des durch die Membran 109 gebildeten Ventiltellers.

Aus Fig. 5 ist ebenfalls zu sehen, daß die Membran selbst keine Öffnungen aufweist, wie dies bei der Ausführungsform nach Fig. 1 der Fall war. Es besteht daher auch nicht die Gefahr, daß diese kleinen Öffnungen sich zusetzen und dadurch zu einer verminderten oder veränderten Funktion des Ventils führen.

0157378

Anmelderin:  GARDENA Kress + Kastner GmbH
             Lichternseestraße 40
             7900 Ulm / Donau


A n s p r ü c h e
— — — — — — — —


## Automatisch steuerbare Ventileinrichtung


1. Automatisch steuerbare Ventileinrichtung für die Wasserzufuhr zu einem wasserverbrauchenden Gerät, mit einem batteriebetriebenen Antrieb für das Ventil (12, 43), der nur während
   des Schließens und Öffnens des Ventils Strom verbraucht,
   dadurch gekennzeichnet, daß das Ventil (12, 43) durch ein
   Hilfsventil (19) hilfsdruckgesteuert und in Schließrichtung
   vorgespannt ist und der Antrieb derart ausgebildet ist,
   daß er zum Öffnen des Ventils mehr Energie benötigt als
   zu dessen Schließen.


2. Ventileinrichtung nach Anspruch 1, dadurch gekennzeichnet,
   daß das Hilfsventil (19) in Schließrichtung vorgespannt
   ist und der Ventilantrieb auf das Hilfsventil (19) einwirkt.

3. Ventileinrichtung nach Anspruch 1 oder 2, dadurch gekennzeichnet, daß der Ventilantrieb über eine von einer Zeitschaltung ansteuerbare Steuerelektronik betätigbar ist.

4. Einrichtung nach einem der Ansprüche 1 bis 3, dadurch gekennzeichnet, daß der Ventilteller (23) des Hilfsventils (19) als Anker eines Elektromagneten (28) ausgebildet ist und der Elektromagnet (28) den Ventilantrieb bildet.

5. Einrichtung nach Anspruch 4, dadurch gekennzeichnet, daß zum Öffnen des Hilfsventils (19) an die Spule (29) des Elektromagneten (28) ein kurzer Stromimpuls angelegt wird.

6. Einrichtung nach Anspruch 4 oder 5, dadurch gekennzeichnet, daß zum Schließen des Ventils ein Impuls umgekehrter Polarität an die Spule (29) des Elektromagneten (28) gelegt wird, dessen Länge und/oder Stärke derart ausgebildet ist, daß der Restmagnetismus des Spulenkerns (27) beseitigt wird.

7. Ventileinrichtung nach einem der Ansprüche 1 bis 6, dadurch gekennzeichnet, daß eine von stromauf des Ventils zum Hilfsventil führende Wasserführung eine Steuerdüse (120) aufweist (Fig. 4 und 5).

8. Ventileinrichtung nach Anspruch 7, dadurch gekennzeichnet, daß bei einem als Membran (109) ausgebildeten Ventilteller die Steuerdüse (120) außerhalb des sich bei Ventilbetätigung verformenden Bereichs der Membran (109) angeordnet ist.

9. Ventileinrichtung nach Anspruch 7 oder 8, dadurch gekennzeichnet, daß stromauf der Steuerdüse (120) ein Sieb (121) angeordnet ist.

0157378

10. Ventileinrichtung nach Anspruch 9, dadurch gekennzeichnet, daß das Sieb etwa tangential zur Hauptströmung der Flüssigkeit angeordnet ist.

11. Ventileinrichtung nach einem der Ansprüche 1 bis 10, dadurch gekennzeichnet, daß der Ventilantrieb bzw. das Ventil derart ausgebildet ist, daß beim Übergang von der Schließstellung in die Öffnungsstellung ein Bereich erhöhten Widerstands vorhanden ist.

— — — — —

FIG. 1

FIG. 2

FIG.3

# FIG.4

# FIG.5